# EUROPEAN PATENT SPECIFICATION

(11) **EP 3 581 403 B1**
(45) Date of publication and mention of the grant of the patent: **05.01.2022**
(21) Application number: 18209555.4
(22) Date of filing: 30.11.2018
(51) Int. Cl.: B60C 15/06, B60C 15/04

(54) **BEAD REINFORCING DEVICE FOR PNEUMATIC TIRES**
WULSTVERSTÄRKUNGSVORRICHTUNG FÜR LUFTREIFEN
DISPOSITIF DE RENFORCEMENT DE TALON POUR PNEUMATIQUES

(30) Priority: 15.06.2018 KR 20180069011
(43) Date of publication of application: 18.12.2019
(73) Proprietor: Hankook Tire Co., Ltd., Seoul 06133 (KR)
(72) Inventor: KIM, Kyung Ho, 34111 Daejeon (KR)
(74) Representative: Pfenning, Meinig & Partner mbB

(56) References cited:
- EP-A1- 0 689 949
- GB-A- 970 772
- JP-A- H0 466 308
- JP-A- S5 591 410
- JP-A- 2002 254 910
- JP-A- 2015 039 970
- KR-B1- 101 760 876
- US-A- 4 023 608
- US-A- 4 896 709
- US-A1- 2002 056 499
- US-A1- 2002 062 897
- US-A1- 2002 074 072
- US-A1- 2003 106 627
- US-A1- 2006 207 703

## Description

### BACKGROUND OF THE INVENTION

### Field of the Invention

The present invention relates to a bead reinforcing device for pneumatic tires, and more particularly, to a bead reinforcing device for a reduction in weight and an improvement in dynamic characteristics of a tire having a low aspect ratio by covering an entire outer surface of a bead of the tire.

### Description of the Related Art

In recent years, automobile and auto parts companies are rapidly expanding the application of ultra-high performance tires (UHPTs) for various purposes such as responding to the advanced driving performance of vehicles and improving the appearances thereof. These ultra-high performance tires generally refer to tires each having a rim diameter of 16 inches or more and a low aspect ratio of 55 or less to specialize in high-speed driving, although there may be differences in standards for each manufacturer.

The low aspect ratio of 55 or less exhibits excellent handling stability in high-speed driving conditions, and provides excellent safety performance to vehicles by excellent braking ability. In order to provide stable driving performance at high speed of 240 km/h or more, many automobile and auto parts companies are focusing on techniques for reinforcing tire beads to improve the dynamic characteristics of tires in recent years.

The tire bead means a portion for fixing a tire to a rim, and the stiffness of the bead filler portion extending from the bead to the sidewall of the tire has a great influence on the dynamic performance of the tire. Especially, in an ultra-high performance tire designed specifically for high speed driving, the bead of the tire is particularly important since the dynamic performance of the tire is very important.

However, when the tire is mounted to the vehicle and runs for a long time, problems relating to deterioration in durability and performance of the bead may be caused since the tire must withstand various internal pressures and loads generated during running. Therefore, in order to prevent these problems, there have been proposed techniques for reinforcing the tire bead to improve the durability and dynamic characteristics of the bead.

Existing Korean Patent No. 10-1760876 (Title: Pneumatic Tire with Improved Durability of Bead) discloses a technique for improving durability of a bead by covering the bead with a stiffener to alleviate deformation and stress concentration that may occur at the bead.

In addition, Korean Patent No. 10-1127637 (Title: Heavy-duty Tire with Bead Stiffener) discloses a technique for preventing an occurrence of separation on a tire carcass end during use of the heavy-duty tire by installing a stiffener on the inner surface of a bead.

The bead reinforcement according to the existing patent techniques is of a type, in which the entire outer surface of the bead is not covered or only a portion of the bead is covered, which is useful for the tire having a high aspect ratio. However, there is a problem in that the bead reinforcement is not usable for the tire having a low aspect ratio or has very low efficiency in use.

Accordingly, for a tire having a low aspect ratio, there is a need to present a new technique for reinforcing a bead and achieving a reduction in weight and an improvement in dynamic characteristics of the tire.

### Citation List

### Patent Literature

Patent Literature 1: Korean Patent No. 10-1760876
Patent Literature 2: Korean Patent No. 10-1127637

### SUMMARY OF THE INVENTION

The present invention has been made in view of the above-mentioned problems, and an object thereof is to provide a bead reinforcing device for improving durability and dynamic performance of a tire having a low aspect ratio by covering an entire outer surface of a bead of the tire in order to expand application of an existing bead reinforcing method through a bead stiffener to the tire.

To accomplish the object described above, a bead reinforcing device for pneumatic tires according to claim 1 is suggested.

The bead may include a bead wire having a steel wire formed at the center thereof and a bead filler formed to cover the bead wire.

The bead stiffener may be made of a textile material.

The bead stiffener is formed as a single piece and comprises an outer bead stiffener part formed to cover an entire outer surface of the bead and an inner bead stiffener part formed to cover a partial inner surface of the bead.

The rubber sheet is configured to cover an inner surface of the bead which is not covered by the bead stiffener.

In a first preferred embodiment in a mounted state of the bead reinforcing device in a pneumatic tire a radially outermost end of the rubber sheet located more radially outwardly than a radially outermost end of the outer bead stiffener part.

In another preferred embodiment in a mounted state of the bead reinforcing device in a pneumatic tire a radially outermost end of the outer bead stiffener part is located more radially outwardly than a radially outermost end of the bead.

### BRIEF DESCRIPTION OF THE DRAWINGS

FIG. 1 is a schematic view illustrating a general structure of a pneumatic tire.
FIG. 2A is a cross-sectional view illustrating a bead reinforcing device of a type that does not cover an inner surface of a bead according to the related art.
FIG. 2B is a cross-sectional view illustrating a bead stiffener of a type that covers only a portion of the outer surface of the bead (Half Bead Packing) according to the related art.
FIG. 3 is a cross-sectional view illustrating a bead reinforcing device of a type that fully covers outer and inner surfaces of a bead (Full Bead Packing), which is not an embodiment of the present invention.
FIG. 4 is a cross-sectional view illustrating a bead reinforcing device of a type that covers an entire outer surface of a bead and only a portion of an inner surface thereof (Mixed Bead Packing) according to an embodiment of the present invention.
FIG. 5(a) is a table illustrating the weight of a tire in which HBP bead reinforcement is applied to a bead filler of 40 mm according to the related art.
FIG. 5(b) is a table illustrating the weight of a tire in which FBP bead reinforcement is applied to a bead filler of 20 mm according to the embodiment of the present invention.
FIG. 6(a) is an experimental data graph obtained by comparing tire cornering stiffness between when the HBP bead reinforcement is applied to the bead filler of 40 mm according to the related art and when the FBP bead reinforcement is applied to the bead filler of 20 mm.
FIG. 6(b) is an experimental data graph obtained by comparing tire peak grip between when the HBP bead reinforcement is applied to the bead filler of 40 mm according to the related art and when the FBP bead reinforcement is applied to the bead filler of 20 mm.

### DETAILED DESCRIPTION OF THE PREFERRED EMBODIMENTS

Reference will now be made in detail to exemplary embodiments of the present invention, examples of which are illustrated in the accompanying drawings. The present invention may, however, be embodied in different forms and should not be construed as limited to the embodiments set forth herein. For clear explanation of the present invention, parts irrelevant to the description may be omitted in the drawings, and like reference numerals refer to like parts throughout the specification.

In the whole specification, it will be understood that when an element is referred to as being "connected (joined, contacted, or coupled)" to another element, it can be "directly connected" to the other element or it can be "indirectly connected" to the other element with other elements being interposed therebetween. In addition, it will be understood that when a component is referred to as "comprising or including" any component, it does not exclude other components, but can further comprise or include the other components unless otherwise specified.

The terminology used in the present disclosure is for the purpose of describing particular embodiments only and is not intended to limit the invention. As used in the disclosure and the appended claims, the singular forms "a", "an" and "the" are intended to include the plural forms as well, unless context clearly indicates otherwise. It will be further understood that the terms "comprises/includes" and/or "comprising/including" when used in this specification, specify the presence of stated features, integers, steps, operations, elements, components, and/or groups thereof, but do not preclude the presence or addition of one or more other features, integers, steps, operations, elements, components, and/or groups thereof.

Hereinafter, exemplary embodiments of the present invention will be described in detail with reference to the accompanying drawings.

A bead reinforcing device for pneumatic tires according to an embodiment of the present invention will be described below in more detail with reference to the accompanying drawings.

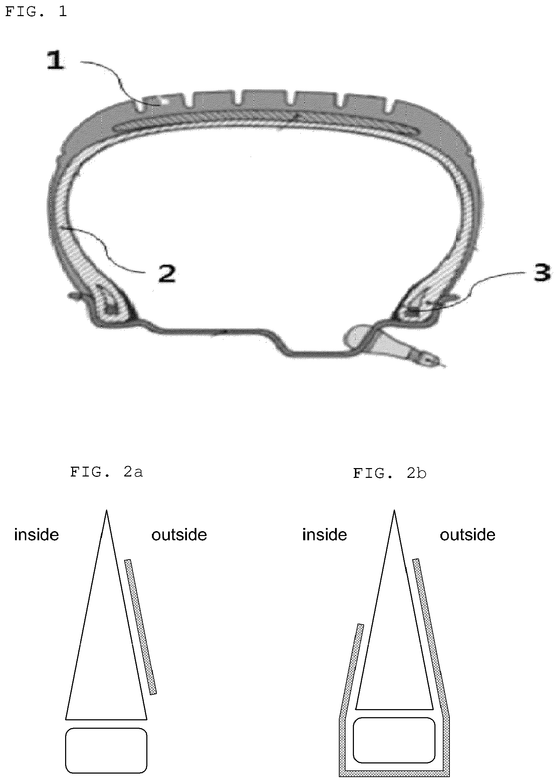

FIG. 1 illustrates a general structure of a pneumatic tire. The pneumatic tire largely includes a tread 1 composed of a thick rubber layer coming into direct contact with the road surface, a carcass 2 corresponding to the frame of the tire while serving to withstand the load of a vehicle, and a bead 3 serving to mount the tire to a rim.

The stiffness of a portion extending from the bead 3 of the tire to a sidewall, which is the side surface of the tire, has a direct and great influence on the dynamic performance of the tire. However, since the tire must withstand various loads generated by running for a long time, deterioration in durability, deformation, and the like may occur in the bead 3, which is directly related to deterioration in dynamic performance of the tire.

Therefore, technology is needed for reinforcing the bead 3 to improve the dynamic performance of the tire and preventing stress from concentrating on the bead 3 to maintain durability.

FIG. 2B is a cross-sectional view illustrating an existing bead reinforcing device of a type in which only a portion of an outer surface of a bead is covered with a bead stiffener (Half Bead Packing).

This tire bead is covered with the bead stiffener for reinforcement to be protected from large deformation of a flange and to improve overall durability by preventing stress concentration. In addition, the reinforcement of the bead can contribute to the stability of the vehicle by increasing stiffness, minimizing the deformation of the vehicle, and improving the handling of the vehicle.

The existing bead stiffener and bead reinforcing method illustrated in the drawing are useful for the tire having a high aspect ratio, but they are not usable for the tire having a low aspect ratio or have very low efficiency in use.

The aspect ratio of the tire means a ratio obtained by multiplying the section height of a tire divided by the section width thereof by 100, and is also referred to as a series. In general, a high aspect ratio has the advantage of good ride comfort, but it is disadvantageous in that handing stability, braking ability, or the like is unstable when the vehicle travels at high speed or corners. Accordingly, the tire having a low aspect ratio is classified as a high performance tire.

In recent years, a variety of vehicles with high performance have been introduced in automobile and auto parts markets, and ultra-high performance tires (UHPTs) that can support the performance have been rapidly commercialized. These ultra-high performance tires (UHPTs) generally refer to tires meeting conditions of a rim diameter of 16 inches or more, a low aspect ratio of 55 or less, and a speed rating of V-rating (240 Km/h) or more, although there may be differences in standards for each manufacturer.

Since each of the ultra-high performance tires (UHPTs) has a low aspect ratio and a strong sidewall, the slip of the tire is reduced and braking performance is improved, thereby reducing a standing wave phenomenon to increase a drivable maximum limit speed. In addition, the ultra-high performance tire is designed such that its heat generation rate is low together with block performance optimized for fast driving, thereby maintaining stable ride comfort even during running at high speed.

Accordingly, in order to improve the dynamic performance and durability of the tire bead corresponding to the performance of the ultra-high performance tire, attention is focused on a technique for reinforcing the tire bead having a low aspect ratio.

The present invention provides a bead reinforcing device for tires, in which the existing bead reinforcing device and bead reinforcing method are extended to a low-aspect-ratio tire mainly constituting an ultra-high performance tire (UHPT), for achieving a reduction in weight and an improvement in dynamic performance of the tire and compensating conventionally various disadvantages.

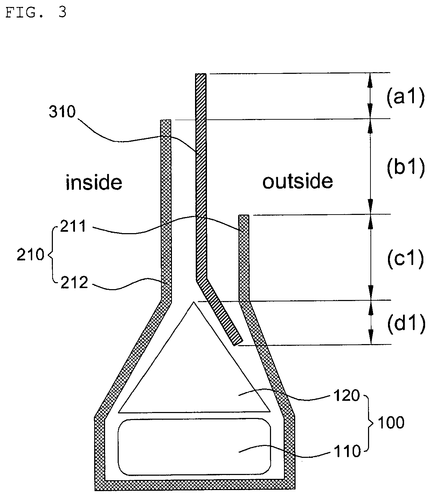

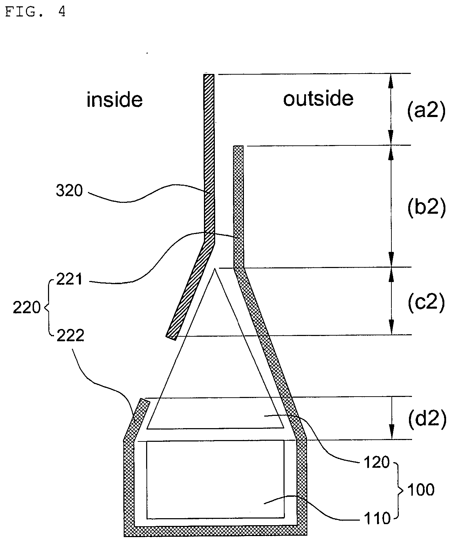

FIGS. 3 and 4 are cross-sectional views illustrating a bead reinforcing device that covers an entire outer surface of a bead 100.

The bead 100 is a portion where a tire is in contact with a wheel and serves to connect the tire to a rim. The bead 100 has a ring shape along the circumference of the tire, and includes a bead wire 110 having a steel wire formed at the center thereof and a bead filler 120 formed to cover the bead wire 110.

The bead stiffener in the existing bead reinforcing method is mainly made of steel, aramid, or nylon. In contrast, in the present invention the bead stiffener is made of a textile material.

In the case where the bead stiffener is made of a textile material, the original purpose of reinforcement of the bead 100 is advantageous in that it is relatively easy to manufacture and manage the bead in addition to the improvement of durability as compared with the existing reinforcement material.

Considering that the present invention specializes in the low-aspect-ratio tire, it will be preferable that the bead 100 has a height of 10 mm to 20 mm. However, the height of the bead 100 is not limited to that described above, and the bead 100 having various heights may be applied as required.

In the embodiment according to figure 3, which is not an embodiment according to the present invention, a rubber sheet 310 is included between the parts of the bead stiffener 210. The addition of the rubber sheet is effective in preventing the separation of semi-finished products which may be caused by covering the bead 100 with the bead stiffener.

FIG. 3 is a cross-sectional view illustrating a bead reinforcing device of a type that fully covers outer and inner surfaces of a bead 100 with a first bead stiffener 210 (Full Bead Packing), which is not an embodiment of the present invention. The first bead stiffener 210 is formed as a single piece and includes a first outer bead stiffener part 211 that covers the outer surface of the bead 100 and a first inner bead stiffener part 212 that covers the inner surface of the bead 100.

According to the embodiment according to figure 3, a first rubber sheet 310 is applied between the parts of the first bead stiffener 210. The first rubber sheet 310 may be positioned between the parts of the first bead stiffener 210 and configured to cover a portion of a side surface of a bead filler 120.

For the proper application the length c1 illustrated in FIG. 3 may be selectively applied according to mold profiles and standards, and it is preferable that the lengths a1 and d1 are about 5 mm and the length b1 is about 7 mm.

FIG. 4 is a cross-sectional view illustrating a bead reinforcing device of a type that covers an entire outer surface of a bead 100 and a portion of an inner surface thereof with a second bead stiffener 220 (Mixed Bead Packing) according to an embodiment of the present invention. The second bead stiffener 220 includes a second outer bead stiffener part 221 that covers the outer surface of the bead 100 and a second inner bead stiffener part 222 that covers the inner surface of the bead 100.

Through such a configuration, a second rubber sheet 320 may be applied between a portion of the inner surface of the bead 100, which is not covered by the second bead stiffener 220, and the carcass 400 to cover the uncovered inner surface of the bead 100.

For the proper application of the embodiment of the present invention, the length c2 illustrated in FIG. 4 may be selectively applied according to mold profiles and standards, and it is preferable that the lengths a2 and d2 are about 5 mm and the length b2 is about 3 mm.

However, the application positions, lengths, or the like of the bead stiffener 200 and rubber sheet 300 of the present invention are not limited to those described above, and may be appropriately changed and used for the proper application of the present invention.

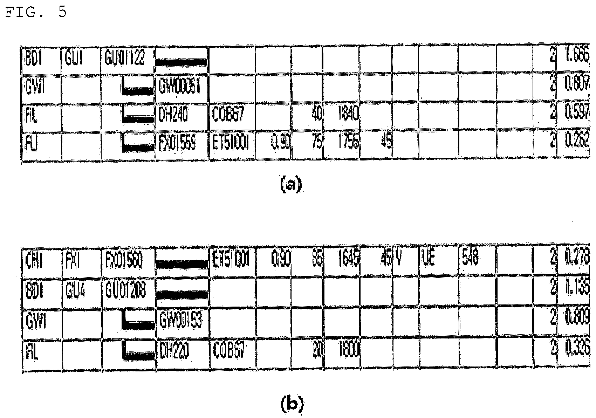

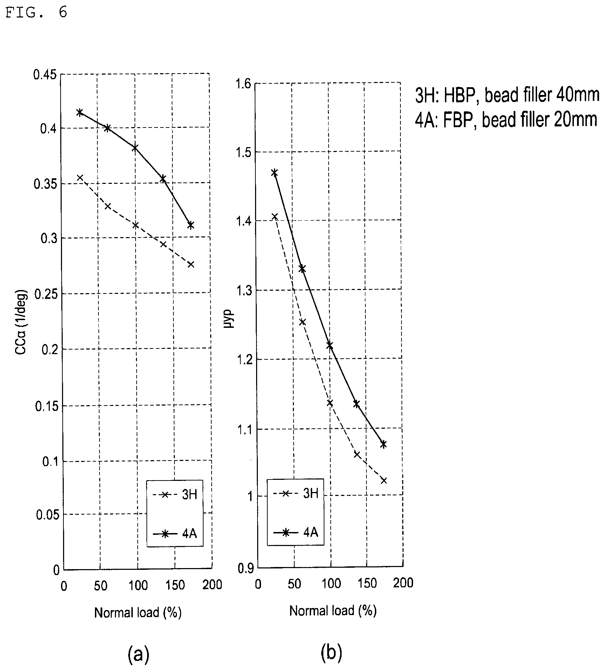

The specific effects of application of the present invention will be described in detail with reference to the tables and graphs attached to FIGS. 5 and 6.

FIG. 5 illustrates Table (a) showing the weight of a tire in which bead reinforcement of a type that covers a partial surface of a bead (Half Bead Packing) is applied to a bead filler of 40 mm according to the related art, and Table (b) showing the weight of a tire in which bead reinforcement of a type that covers an entire surface of a bead 100 (Full Bead Packing) is applied to a bead filler 120 of 20 mm.

The total weight of the tire with reinforced beads according to the related art is 1.666 kg as shown in Table (a), the total weight of the tire with reinforced beads of the Full Bead Packing (FBP) type is 1.413 kg as shown in Table (b).

Through the results of the experimental tables (a) and (b), it can be seen that the tire to which the bead reinforcement (Full Bead Packing) is applied is reduced in weight by 200 g or more compared to the low-aspect-ratio tire, namely the tire having a low section height, to which the bead reinforcement (Half Bead Packing) of the related art is applied.

FIG. 6(a) is an experimental data graph obtained by comparing cornering stiffness between when the bead reinforcement of the type that covers the partial surface of the bead (Half Bead Packing) is applied to the bead filler of 40 mm according to the normal load in the related art and when the bead reinforcement of the type that covers the entire surface of the bead 100 (Full Bead Packing) is applied to the bead filler 120 of 20 mm.

The cornering stiffness refers to a differential value at which a side force occurs at a slip angle of 0 degrees according to the relationship between the slip angle of the tire and the side force thereof. The cornering stiffness is a reference magnitude of the force generated when the direction of the tire in progress is changed, and is a factor affecting the handling and stability of the vehicle. In general, the tire has excellent dynamic performance as the cornering stiffness is high.

FIG. 6(b) is an experimental data graph obtained by comparing peak grip between when the bead reinforcement of the type that covers the partial surface of the bead (Half Bead Packing) is applied to the bead filler of 40 mm according to the normal load in the related art and when the bead reinforcement of the type that covers the entire surface of the bead 100 (Full Bead Packing) is applied to the bead filler 120 of 20 mm.

In the graph (a), the influence for each structure may be somewhat different, but it can be seen that the application of the bead reinforcement according to the present invention allows the cornering stiffness to be increased by about 5 to 15% or more. In the graph (b), it can be seen that the application of the bead reinforcement according to the present invention allows the peak grip to be also increased.

The increased effect of the cornering stiffness by 5% or more corresponds to a degree of change that is hardly seen without changing the constituent compounds of the tire. In view of above experimental data, it can be seen that the bead reinforcing device of the type that fully covers outer and inner surfaces of a bead (Full Bead Packing) has a remarkably excellent effect in improving the dynamic performance of the tire compared to the related art.

The effect of static characteristics according to the application of the present invention will be described in detail with reference to the following Table 1.

**[Table 1]**

| | HBP | FBP |
|---|---|---|
| Kv | 100% | 78% |
| Kd | 100% | 151% |

In the above Table 1, it can be seen that the application of the bead reinforcement according to the Full Bead Packing type allows the distortional stiffness of the tire to be increased by about 51% due to the change of the Kd value and the vertical stiffness thereof is reduced by about 22% due to the change of the Kv value, compared to the related art.

Accordingly, since the vertical stiffness is reduced by applying the bead reinforcement of the present invention to the low-height bead filler, it can be expected to improve enveloping characteristics allowing the tire to absorb impact, the comfort of the vehicle, etc. as a whole. Hence, it is possible to reduce the weight of the tire and improve the static/dynamic characteristics thereof by expanding the application of the conventional bead reinforcing device and method for tire beads to the tire having a low aspect ratio and to simultaneously compensate conventionally various disadvantages.

Since the bead stiffener is made of the textile, the present invention can be advantageous in terms of management in addition to durability. When the rubber sheet 310 is applied between the inner or outer reinforcements of the bead 100, it is possible to prevent a separation phenomenon due to the application of different materials.

The present invention with the above-mentioned configuration has an effect of providing the bead reinforcing device suitable for the tire having a low aspect ratio, thereby reducing the weight of the tire and improving the dynamic performance of the tire as compared with the existing technology.

In addition, the present invention has an effect of increasing the durability of the bead and its efficiency in terms of management by means of the bead stiffener made of a textile while preventing the separation of semi-finished products due to the application of different materials by applying the rubber sheet between the parts of the bead stiffener.

The present invention is not limited to the above effects.

The above-mentioned embodiments of the present invention are merely examples, and it will be understood by those skilled in the art that various modifications may be made without departing from the scope of the invention. Therefore, it should be understood that the embodiments described above are for purposes of illustration only in all aspects and are not intended to limit the scope of the present invention.

The scope of the present invention is defined by the appended claims.

## Claims

1. A bead reinforcing device for pneumatic tires, comprising:
a bead (100) forming a circumference of a tire as a portion where the tire is in contact with a wheel;
a carcass formed to cover the bead (100) from its inside to its outside and forming an entire frame of the tire;
a bead stiffener (220) formed as a single piece, the bead stiffener comprising
an outer bead stiffener part (221) formed to cover an entire outer surface of the bead and an inner bead stiffener part (222) formed to cover a partial inner surface of the bead (100),
**characterised in that** the bead reinforcing device further comprises a rubber sheet (320), configured to cover an inner surface of the bead (100) which is not covered by the bead stiffener (220).

2. The bead reinforcing device according to claim 1, wherein in a mounted state of the bead reinforcing device in a pneumatic tire a radially outermost end of the rubber sheet (320) is located more radially outwardly than a radially outermost end of the outer bead stiffener part (221).

3. The bead reinforcing device according to claim 1, wherein in a mounted state of the bead reinforcing device in a pneumatic tire a radially outermost end of the outer bead stiffener part (221) is located more radially outwardly than a radially outermost end of the bead (100).

## Patentansprüche

1. Wulstverstärkungseinrichtung für Luftreifen, umfassend;
eine Wulst (100), die einen Umfang eines Reifens als einen Abschnitt bildet, in dem der Reifen in Kontakt mit einem Rad ist;
eine Karkasse, die ausgebildet ist, die Wulst (100) von innen nach außen zu bedecken und die einen gesamten Rahmen des Reifens bildet;
eine Wulstversteifung (220), die als einzelnes Stück ausgebildet ist, wobei die Wulstversteifung umfasst
ein äußeres Wulstversteifungsteil (221), das ausgebildet ist, eine gesamte Außenoberfläche der Wulst zu bedecken, und ein inneres Wulstversteifungsteil (222), das ausgebildet ist, eine Innenoberfläche der Wulst (100) teilweise zu bedecken,
**dadurch gekennzeichnet, dass** die Wulstverstärkungseinrichtung ferner eine Gummilage (320) umfasst, die eingerichtet ist, eine Innenoberfläche der Wulst (100) zu bedecken, die nicht von der Wulstversteifung (220) bedeckt ist.

2. Wulstverstärkungseinrichtung nach Anspruch 1, wobei in einem montierten Zustand der Wulstverstärkungseinrichtung in einem Luftreifen ein radial äußerstes Ende der Gummilage (320) weiter radial außen angeordnet ist als ein radial äußerstes Ende des äußeren Wulstversteifungsteils (221).

3. Wulstverstärkungseinrichtung nach Anspruch 1, wobei in einem montierten Zustand der Wulstverstärkungseinrichtung in einem Luftreifen ein radial äußerstes Ende des Wulstversteifungsteils (221) weiter radial außen angeordnet ist als ein radial äußerstes Ende der Wulst (100).

## Revendications

1. Dispositif de renforcement d'un talon de pneumatiques, comprenant :
un talon (100) qui forme la circonférence d'un pneumatique en tant que partie où le pneumatique est en contact avec une roue ;
une carcasse formée afin de couvrir le talon (100) à partir de son intérieur vers son extérieur, et qui forme toute l'armature du pneumatique ;
un renfort de talon (220) formé comme une seule pièce, le renfort de talon comprenant
une partie renfort de talon extérieure (221) formée afin de couvrir toute la surface extérieure du talon, et une partie renfort de talon intérieure (222) formée afin de couvrir une surface intérieure partielle du talon (100),
**caractérisé en ce que** le dispositif de renfort de talon comprend en outre une feuille de caoutchouc (320), configurée afin de couvrir une surface intérieure du talon (100) qui n'est pas couverte par le renfort de talon (220).

2. Dispositif de renforcement d'un talon selon la revendication 1, dans lequel, dans un état monté du dispositif de renforcement de talon dans un pneumatique, une extrémité la plus extérieure radialement de la feuille de caoutchouc (320), se situe plus radialement vers l'extérieur qu'une extrémité la plus extérieure radialement de la partie renfort de talon extérieure (221).

3. Dispositif de renforcement d'un talon selon la revendication 1, dans lequel, dans un état monté du dispositif de renforcement de talon dans un pneumatique, une extrémité la plus extérieure radialement de la partie renfort de talon extérieure (221), se situe plus radialement vers l'extérieur qu'une extrémité la plus extérieure radialement du talon (100).
